# FASCICULE DE BREVET EUROPEEN

(11) **EP 3 081 488 B1**
(45) Date de publication et mention de la délivrance du brevet: **29.01.2020**
(21) Numéro de dépôt: 16165046.0
(22) Date de dépôt: 13.04.2016
(51) Int. Cl.: B64D 11/00, B64D 11/06

(54) **CABINE D'AÉRONEF INTERACTIVE**
INTERAKTIVE LUFTFAHRZEUGKABINE
INTERACTIVE AIRCRAFT CABIN

(30) Priorité: 14.04.2015 FR 1553244
(43) Date de publication de la demande: 19.10.2016
(73) Titulaire: Stelia Aerospace, 17300 Rochefort (FR)
(72) Inventeur: CARLES, Blaise, 17300 ROCHEFORT (FR); CARRATERO, Pascal, 17620 SAINT-AGNANT (FR)
(74) Mandataire: Ipside

(56) Documents cités:
- WO-A1-2015/169570
- WO-A1-2016/165998
- US-A1- 2010 217 458
- US-B1- 6 929 218
- RALF GOD ET AL: "Drahtlose Kommunikation in der Flugzeugkabine für effiziente Arbeitsabläufe und Passagierdienstleistungen", MKWI 2010 MULTIKONFERENZ WIRTSCHAFTSINFORMATIK, GÖTTINGEN, FEBRUARY 23-25, 2010, vol. 0, 25 février 2010 (2010-02-25), pages 2361-2374, XP055096017,

## Description

L'invention appartient au domaine des interactions entre un passager dans une cabine d'aéronef et des dispositifs de la cabine, en particuliers de dispositifs pour adapter le confort de la cabine à ses besoins et pour simplifier les relations entre un équipage commercial et le passager.

Plus particulièrement l'invention concerne une cabine d'aéronef dans lequel des équipements de la cabine tel qu'un siège ou un terminal de dialogue avec des membres de l'équipage gérant la cabine interagissent avec un terminal personnel portable du passager.

Il est connu de mettre en œuvre des terminaux portables tels que des télécommandes ou des boutons d'appel pour agir sur des équipements divers comme par exemple des téléviseurs, des enregistreurs, des éclairages, des rideaux électriques, des sonneries d'appel ...

Aujourd'hui, de telles télécommandes sont souvent sans fil et transmettent des signaux de commande par une liaison ultrasonique, infrarouge ou radio.

Il est également connu d'utiliser des terminaux de type téléphone-ordinateur de poche ou de tablettes numériques, lesquels comportent des moyens de connexion sans fil, pour émuler des télécommandes afin de mettre en œuvre ces téléphones-ordinateurs portables et tablettes en lieu et place des télécommandes spécialisées.

Dans ces cas d'émulation, il est généralement chargé sur le téléphone-ordinateur portable ou la tablette une application spécifique qui simule l'interface opérateur sur un écran et code les signaux émis suivant les spécifications de la télécommande remplacée.

Lorsque de tels téléphones-ordinateurs de poche ou tablettes sont connectées à un réseau internet, ils ont accès comme tout ordinateur connectés à la consultation de données et dans certains cas avec la possibilité d'agir à distance sur des équipements domestiques également connectés.

Dans ces différentes applications, l'opérateur du téléphone-ordinateur portable ou de la tablette agit sur un environnement qui lui est propre, en particulier sur ses équipements domestiques pour répondre à des besoins qu'il a déterminés à l'avance.

Lorsqu'il change des équipements ou que ses besoins évoluent il doit alors reconsidérer les applications qu'il a installées.

La présente invention étend le champ d'application des terminaux personnels portables, tels que les téléphones-ordinateurs portables et les tablettes, en intégrant le terminal personnel dans l'environnement local d'une cabine d'aéronef, le terminal devenant dans le contexte de l'invention un équipement de la cabine de l'aéronef.

A cet effet on connaît la demande de brevet américain N° US 2010/217458 A1 décrivant une cabine d'avion comportant un siège muni d'un terminal de gestion graphique communiquant avec un équipement mobile d'un passager pouvant optionnellement agir sur ledit terminal de gestion. Le document Drahtlose Kommunikation in der Flugzeugkabine für effiziente Arbeitsabläufe und Passagierdienstleistungen, Ralf God, Hartmut Hintze de RALPH GOD ET AL 2010, décrit également un siège d'une cabine d'aéronef communiquant bidirectionnellement et sans fil avec un dispositif mobile du passager, ledit dispositif pouvant être utilisé pour permettre la communication de service avec l'équipage de la cabine. Néanmoins, l'architecture des cabines interactives décrites dans ces documents ne permet qu'une gestion limitée de la cabine. La présente invention propose une cabine interactive améliorée dans les possibilités de gestion de la cabine. Plus particulièrement, la présente invention concerne une cabine suivant la revendication 1.

La cabine d'aéronef de l'invention comporte une pluralité de sièges dont au moins un siège de ladite pluralité de sièges est appairé avec un terminal passager.

Ledit siège et ledit terminal passager appairé communiquent entre eux sans fil pour transmettre des données numériques relatives à des capacités de réglage dudit siège depuis une unité de gestion du siège considéré vers le terminal passager et pour transmettre des données numériques relatives à des instructions de réglages du siège depuis le terminal passager vers l'unité de gestion du siège.

Le terminal passager comporte un logiciel d'application interprétant les données reçues de l'unité de gestion du siège pour afficher sur un écran du terminal passager une représentation des réglages possibles pour le siège et interprétant des actions d'un opérateur sur des touches du terminal passager comme des instructions de réglage du siège.

Le terminal passager, tel qu'un téléphone-ordinateur ou une tablette numérique, bénéficiant d'écrans dotés de fonctions tactiles constituant une interface conviviale, est ainsi intégré dans un système de gestion de la cabine qui permet au passager d'interagir à partir d'un équipement personnel sur les commandes lui permettant de personnaliser le siège qui lui est attribué pour la durée d'un vol.

Dans une forme de réalisation, la cabine d'aéronef comporte au moins un calculateur principal de ladite cabine, ledit calculateur échangeant des données numériques avec au moins un terminal passager appairé à un siège et avec au moins un terminal équipage fixe et ou un terminal équipage mobile pour transmettre audit terminal passager des requêtes que ledit terminal passager est autorisé à émettre et pour transmettre des requêtes, choisies par un opérateur, audit terminal passager, depuis ledit terminal passager audit terminal équipage, et pour transférer des requêtes, choisies par un opérateur audit terminal équipage, depuis ledit terminal équipage audit terminal passager, des logiciels d'applications exécutés par les dits terminaux passager et équipage affichant les requêtes reçues et affichant chacun des interfaces pour permettre à des opérateurs de formuler des requêtes.

Il est ainsi possible de créer une communication directe et personnalisée entre chaque passager et les membres de l'équipage au travers d'échanges construits par des choix présentés sur des écrans des terminaux passager et des terminaux équipages. Il est ainsi mémorisé les demandes qui peuvent être gérées dans le temps et dont la présentation structurée peut par des présentations dans des langues différentes faciliter les relations entre l'équipage et un passager.

Dans une forme de réalisation l'unité de gestion d'au moins un siège de la pluralité de sièges est connecté par une liaison numérique filaire à un module de communication pour transmettre directement les données numériques relatives à des instructions de réglages dudit siège, reçues du terminal passager par liaison sans fil, à l'unité de gestion du siège considéré.

Il est ainsi limité la chaîne physique de transmission des instructions du passager pour ajuster son siège ce qui permet des réponses rapides aux instructions.

Dans une forme de réalisation, l'unité de gestion de chaque siège de la pluralité de sièges est connecté par une liaison numérique filaire à un module de communication pour transmettre à l'unité de gestion du siège considéré les données numériques relatives à des instructions de réglages dudit siège, reçues par liaison sans fil d'un boîtier de communication cabine, ledit boîtier de communication cabine relayant les instructions de réglage dudit siège émises par le terminal passager par liaison sans fil et reçues par ledit boîtier de communication cabine.

Dans une forme de réalisation au moins un siège comporte un module de communication connecté à la seule unité de gestion du siège considéré.

Dans une forme de réalisation, au moins un module de communication est connecté à plusieurs unités de gestion appartenant chacune à un des sièges d'un groupe de sièges immédiatement voisins dans ladite cabine.

Dans une forme de réalisation, au moins un module de communication est mis en œuvre comme relais de transmission des données entre un boîtier de communication cabine et au moins un autre module de communication.

Ces différentes formes de réalisation, pouvant être combinées, permettent d'adapter la structure d'un système d'échange des données entre le calculateur central, les sièges et les terminaux passager et équipage pour limiter les puissances émises, en particulier dans les liaisons radio, et pour, en cas de panne de certains composants, assurer des transmissions des données avec un minimum de conséquences négatives.

Dans une forme de réalisation, les données échangées entre un terminal passager et le calculateur principal sont reçues et émises par le un boîtier de communication cabine directement ou via un module de communication d'un siège ou d'un groupe de sièges.

Avantageusement pour une bonne identification de l'emplacement d'un passager chaque siège de la pluralité de siège est identifié dans la cabine par un identifiant unique.

Par exemple, un terminal passager comporte une caméra de lecture optique et le logiciel d'application du terminal passager est configuré pour décoder un code graphique apposé sur le siège et caractéristique de l'identifiant unique lors de l'appairage dudit siège et dudit terminal passager.

L'invention concerne également un procédé de gestion d'interactions entre au moins un terminal passager, communiquant des données numériques par une liaison sans fil, et au moins un siège d'une pluralité de sièges d'une cabine d'avion telle qu'elle est décrite précédemment.

Suivant le procédé, un logiciel d'application de gestion d'interactions est préalablement installé sur ledit au moins un terminal passager.

Le procédé comporte une première étape d'appariement dudit au moins un terminal passager avec l'au moins un siège par une identification par le terminal passager du siège et comporte une deuxième étape d'initialisation dans laquelle dite étape d'initialisation :
- des capacités de réglage du siège sont transmises au terminal passager et des informations, mémorisées antérieurement sur ledit terminal passager, sont transmises à l'unité de gestion du siège ;
- le logiciel d'application présente sur un écran du terminal passager au travers de représentations graphiques et ou textuelles les fonctions accessibles à un opérateur utilisant ledit terminal passager pour modifier les réglages du siège.

Lors de l'étape d'appariement, des données personnelles d'un passager, identifié comme possesseur du terminal passager dans ledit terminal passager, mémorisées dans une mémoire dudit terminal passager, sont transmises à un calculateur principal de la cabine, ledit calculateur principal :
- vérifiant qu'une identité dudit passager correspond à un passager effectivement enregistré sur le vol en cours de chargement et le cas échéant vérifiant, par comparaison à une liste d'embarquement transmise par un poste d'enregistrement des passagers, que le passager tente d'appairer son terminal passager avec le siège qui lui a effectivement été attribué lors de son enregistrement ;
- enregistrant les dites données personnelles de sorte à construire une table des passagers effectivement embarqués et au besoin affichant sur un écran d'un terminal équipage un plan de cabine avec les noms de chacun des passagers.

Dans une forme de mise en œuvre, un terminal passager reçoit du calculateur principal des données caractéristiques de requêtes pouvant être formulées par un passager auprès de l'équipage, les dites données reçues par le terminal passager déterminant des possibilités d'affichage sur l'écran dudit terminal passager par lequel écran d'affichage le passager effectue des requêtes.

Dans une forme de mise en œuvre, un terminal passager reçoit du calculateur principal des informations et ou des requêtes et ou des instructions élaborées par au moins un terminal équipage fixe et ou par un terminal équipage mobile.

Dans une forme de mise en œuvre, des données personnelles d'un passager, enregistrées dans le calculateur principal lors de l'appariement du terminal passager avec le siège, sont affichées, sur au moins un terminal équipage fixe et ou un terminal équipage mobile, par une interaction d'un opérateur avec un écran dudit au moins un terminal équipage fixe ou terminal équipage mobile, et ou lors de la réception d'une requête émise par le terminal passager et reçue par le calculateur principal.

En particulier, un terminal passager appairé avec un siège, sur action d'un opérateur dudit terminal passager :
- émet des instructions pour modifier les réglages autorisés du siège, par mouvement d'éléments mobiles du siège, par modification d'intensité lumineuse d'un éclairage individuel du siège, par modification d'un débit et ou d'une température de ventilation individuelle du siège ;
- émet des requêtes pour le choix d'une heure de réveil par activation de mouvements d'éléments mobiles du siège et ou par modification d'intensité lumineuse d'un éclairage individuel ;
- émet des requêtes à l'attention de l'équipage pour demander une assistance, pour réserver un plat pour un repas, pour demander une boisson, pour demander une revue, pour commander un article dans la boutique détaxée du bord, lesdites requêtes étant formulées au travers d'une interface graphique et ou textuelle affichée sur l'écran du terminal passager, ladite interface n'affichant que les requêtes possibles au moment de leurs formulations.

Dans un mode de mise en œuvre, une requête émise à l'attention de l'équipage, lorsqu'elle est reçue par le calculateur principal, est transmise à au moins un terminal équipage mobile identifié par le calculateur principal comme étant le terminal équipage le plus proche du siège appairé au terminal passager à l'origine de la requête, ledit terminal équipage mobile étant par exemple localisé dans la cabine par la force d'un signal reçu.

Ces différents modes de l'invention, pouvant être combinés dans la mesure où ils sont techniquement compatibles, permettent aux passagers et aux personnels de l'équipage de simplifier les échanges dans l'environnement de la cabine et de simplifier les tâches de l'équipage pour un service amélioré des passagers.

Dans une forme de mise en œuvre, les actions réalisées par un opérateur, a priori le passager qui détient le terminal, sur un terminal passager appairé avec un siège sont mémorisées dans une mémoire d'une unité de gestion du siège, et ou dans une mémoire du calculateur principal et ou dans une mémoire du terminal passager en vue de leurs transmissions ultérieures vers un centre de traitement statistique sur l'utilisation des interactions dans la cabine.

Il est ainsi possible dans le cadre de la mise en place d'une meilleure prestation de prendre en compte pour un vol futur des préférences du passager sans que celui-ci ait à définir ses préférences en remplissant un fastidieux questionnaire.

Dans une forme de mise en œuvre du procédé, les interactions réalisées sur le siège et ou les défauts de fonctionnement détectés par des systèmes de surveillance sont mémorisés dans une mémoire du siège et ou une mémoire du calculateur central sous la forme d'un historique pour être analysé par un outil de maintenance des sièges.

La description et les dessins d'un mode particulier de réalisation de l'invention, permettront de mieux comprendre les buts et avantages de l'invention. Il est clair que cette description est donnée à titre d'exemple, et n'a pas de caractère limitatif.

Dans les dessins :
- la figure 1 : illustre schématiquement une cabine d'aéronef suivant l'invention et les principaux équipements mis en œuvre ;
- la figure 1a : illustre un exemple de siège pour une cabine de l'invention ;
- les figures 2a et 2b : illustrent des exemples d'affichage sur l'écran du terminal passager lors d'une étape d'appairage du terminal portable avec un siège ;
- la figure 3 : illustre un exemple d'affichage pour appeler des réglages sièges depuis le terminal passager ;
- la figure 4 : illustre schématiquement les éléments constitutif d'un système de contrôle des mouvements du siège ;
- les figures 5a et 5b : des exemples d'affichage sur l'écran du terminal portable des fonctions mises à disposition du passager par son terminal portable : figure 5a les réglages individuels de chaque partie d'un siège et figure 5b les mémorisations de réglages particuliers ;
- les figures 6a et 6b : des exemples d'affichage sur l'écran du terminal portable de saisie d'une heure de réveil, figure 6a, et de contrôle et activation d'une heure de réveil saisie ;
- la figure 7 : un exemple de l'affichage en retour d'un appel steward ou hôtesse sur l'écran du terminal passager ;
- la figure 8 : un exemple d'une page de choix, dans l'exemple d'un choix de film à visualiser, affiché sur l'écran du terminal passager ;
- la figure 9 : un exemple d'une page de choix, dans l'exemple d'un choix de plats et de boissons pour le repas, affiché sur l'écran du terminal passager ;
- les figures 10a et 10b : un exemple d'un enchaînement d'affichages sur l'écran du terminal portable dans le choix d'un plat au menu, sur la figure 10a la visualisation d'un choix et sur la figure 10b l'affichage en retour de la commande passée à l'équipage ;
- les figures 11a, 11b, 11c, 11d : des exemples d'affichages sur l'écran du terminal passager d'informations générales sur le vol en cours : figure 11a un menu de fonctions disponibles, figures 11b les consignes de sécurité sous la forme d'une séquence vidéo, figures 11c des informations sur le type d'aéronef et figure 11d des informations sur le déroulement du vol ;
- la figure 12 : un premier exemple d'architecture du système de communication des données dans la cabine ;
- la figure 13 : un deuxième exemple d'architecture du système de communication des données dans la cabine ;
- la figure 14 : un troisième exemple d'architecture du système de communication des données dans la cabine.

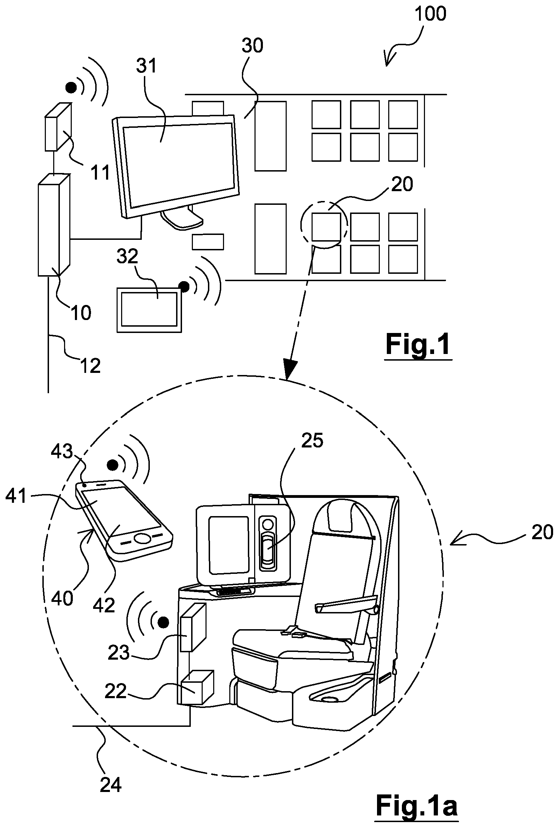

La figure 1 illustre de manière schématique une cabine d'aéronef 100 comportant une pluralité de sièges 20 et différents équipements susceptibles d'être intégrés dans la cabine de l'invention.

On utilisera dans la suite de la description le terme terminal pour désigner tout type de terminal adapté à des transmissions de données sans fil, porté ou portable par un passager de la cabine, comportant des capacités de présentations graphiques et alphanumériques reconfigurables, par exemple un écran de résolution adaptée, avantageusement couleurs, et des boutons de commandes tels que des touches d'un clavier, des clés de lignes ou de colonnes situées sur des bords d'un écran, ou des zones sensibles au touché d'un écran sur lequel peuvent être représentés des symboles délimitant des boutons de commande associés à ces zones.

Un tel terminal est par exemple un téléphone-ordinateur portable, souvent désigné SmartPhone dans une terminologie anglosaxone, ou une tablette numérique.

Pour la suite de la description il sera considéré comme terminal portable, de manière non limitative, l'exemple d'un téléphone incorporant des fonctions de type ordinateur portable, disposant d'un écran d'affichage recouvert d'une surface tactile, et disposant de la possibilité de recevoir et de transmettre des données numériques par une liaison radioélectrique suivant le standard WiFi.

Il sera également considéré le cas où le terminal est pourvu d'une caméra vidéo numérique intégrée.

La cabine 100 comporte une pluralité de siège 20 passagers et comporte au moins une zone équipage 30 dédiée aux activités réservées à l'équipage commercial.

Les sièges 20 sont des sièges passager conventionnels par leurs formes, dimensions et capacité d'adaptation au confort souhaité par un passager, en particulier par la mobilité de différentes parties du siège : dossier, assise, repose jambes, accoudoir, et par des fonctions annexes telles que les éclairages, la ventilation et les dispositifs d'occupation individuels, ces différents éléments devant être considéré comme incorporés dans le terme « siège » lorsqu'il est utilisé dans la présente description.

Les sièges 20 sont également conventionnels dans leur agencement dans la cabine 100 qui peut être très variable en fonction des dimensions de la cabine et du confort proposé par l'exploitant de l'aéronef.

A titre d'exemple non limitatif, il est illustré sur la figure 1 une cabine à quatre sièges de front et une allée centrale.

Dans la cabine, à chaque siège 20, comme illustré sur le détail de la figure 1a illustrant un siège isolé, est associé un terminal passager 40, au moins lorsque le siège est attribué à un passager lors d'un vol.

Le terminal passager 40 comporte dans l'exemple illustré un écran d'affichage 41, avantageusement couleur, recouvert d'une surface tactile 42 pour interagir avec le terminal passager, et une caméra vidéo 43.

Le siège comporte 22 comporte également une unité de gestion 22 qui assure la gestions des différentes parties du siège, en particulier actionneurs et éclairages, et comporte un module 23 d'émission et de réception de signaux de communication.

Dans une forme de réalisation, le module 23 peut être partagée entre deux ou plus sièges.

Le cas échéant, le siège comporte également une liaison filaire 24 pour transmettre des données entre l'unité de gestion 22 du siège et un calculateur principal 10 de la cabine.

La zone équipage 30 comporte au moins un terminal équipage fixe 31 et ou au moins un terminal équipage mobile 32.

Le calculateur principal 10 assure la gestion de la cabine et des échanges de données entre les différents équipements de ladite cabine et les différents terminaux.

Le calculateur principal 10 est couplé à au moins un boîtier cabine de communication sans fil 11 et, suivant l'architecture d'un réseau de communication mis en œuvre dans la cabine de l'invention, est connecté à un réseau filaire 12 de communication de données numériques.

Dans la cabine 100, les sièges 20, les terminaux passager 40, le ou les terminaux équipage fixes 31, et le ou les terminaux équipage mobiles 32 sont reliés fonctionnement par des échanges de données numériques, qui sont nécessairement réalisés, au moins lors d'une étape des transmissions, sans fils de ou vers les terminaux passager et terminaux équipage mobiles, et qui peuvent dans les autres cas être réalisés avec ou sans fils.

Les différents éléments mis en œuvre dans la présente cabine 100 de l'invention seront détaillés et mieux compris dans la description détaillée d'exemples de mise en œuvre de l'invention.

Dans un aéronef affecté au transport de passagers, chaque passager se voit généralement attribuer, lors de sa réservation ou de son enregistrement avant embarquement, un siège identifié dans la cabine par son emplacement, numéro du siège ou position dans une rangée déterminée par un numéro par exemple.

Dans le cas présent, il est fait l'hypothèse que le passager détient un terminal passager 40, soit que le passager possède un téléphone, une tablette ou tout autre équipement personnel compatible avec son utilisation comme terminal passager, soit qu'un terminal passager a été mis à sa disposition lors de son enregistrement ou de son accès à bord de l'aéronef.

Comme préalable à une première utilisation, un logiciel d'application est chargé sur le terminal passager 40, logiciel d'application qui une fois lancé pour être exécuté sur ledit terminal passager gère les transferts de données entre ledit terminal passager et les autres équipements de la cabine 100 avec lesquels il est prévu des interactions, détermine les affichages réalisés sur l'écran d'affichage 41 dudit terminal passager et interprète les actions réalisées sur les commandes dudit terminal passager.

Le chargement de l'application peut être effectué par toute méthode conventionnelle, par exemple par une liaison avec un serveur distant de téléchargement ou avec un ordinateur local.

Dans une première étape, une fois que le logiciel d'application est en cours d'exécution, le terminal passager 40 est appairé au siège attribué au passager. L'appariement est réalisé en communiquant au terminal passager un identifiant unique 21 du siège.

L'identifiant unique, par exemple équivalent à une chaîne de caractères alphanumériques peut être saisi par l'intermédiaire d'un clavier du terminal portable.

Avantageusement, le logiciel d'application comporte un sous-programme de reconnaissance des images fournies par la caméra vidéo 43 du terminal passager, actif lorsque le terminal passager est en phase d'appariement, de sorte à permettre la lecture d'un code à barres ou d'un code à deux dimensions, souvent désigné QRCode, lequel code est affiché sur le siège et le cas échéant est imprimé sur la carte d'embarquement qui est remise au passager lors de son enregistrement.

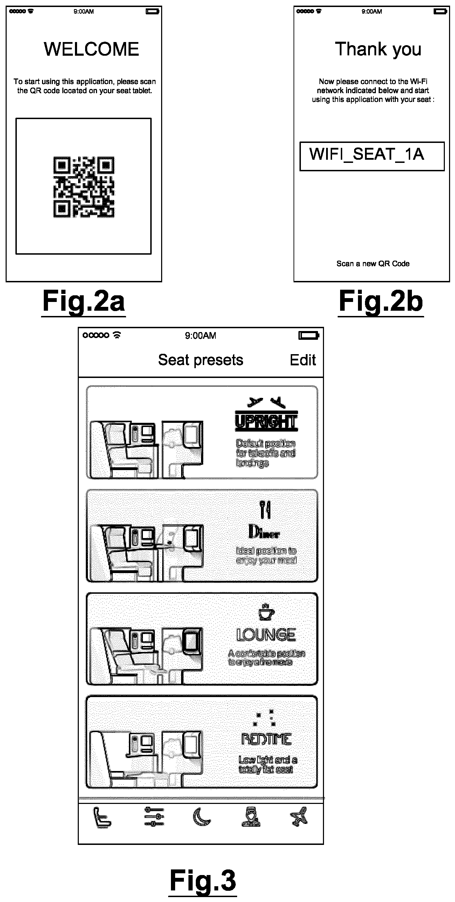

Dans ce cas, l'appariement est effectué par la simple lecture, au moyen de la caméra 43 du terminal passager, du code sur le siège ou sur la carte d'embarquement, comme dans l'exemple illustré sur la figure 2a lors de la saisie d'un QRCode et de la confirmation de la saisie sur la figure 2b.

Avantageusement lors de l'opération d'appariement, un identifiant du terminal passager 40 est transmis au système cabine de sorte que le dit terminal passager ne puisse pas être appairé à un second siège et qu'un autre terminal passager ne puisse pas être appairé au même siège, jusqu'à une réinitialisation du système de la cabine.

Lorsque le terminal passager 40 est appairé au siège 20, ledit terminal devient un équipement de la cabine 100 et est connu fonctionnellement du calculateur principal 10 et, directement ou indirectement, des autres éléments de la cabine avec lesquels il interagit dans des limites fonctionnelles prévues par le logiciel d'application et contrôlées par le calculateur principal 10.

Il doit être compris que les interactions d'un terminal passager 40 avec un siège 20 ne peuvent s'adresser, au moins en première intention, qu'au siège auquel le dit terminal passager a été appairé.

De l'appariement du terminal passager avec un siège 20 découle un ensemble d'échange de données qui vont avoir pour conséquences de modifier les comportements des différents éléments de la cabine.

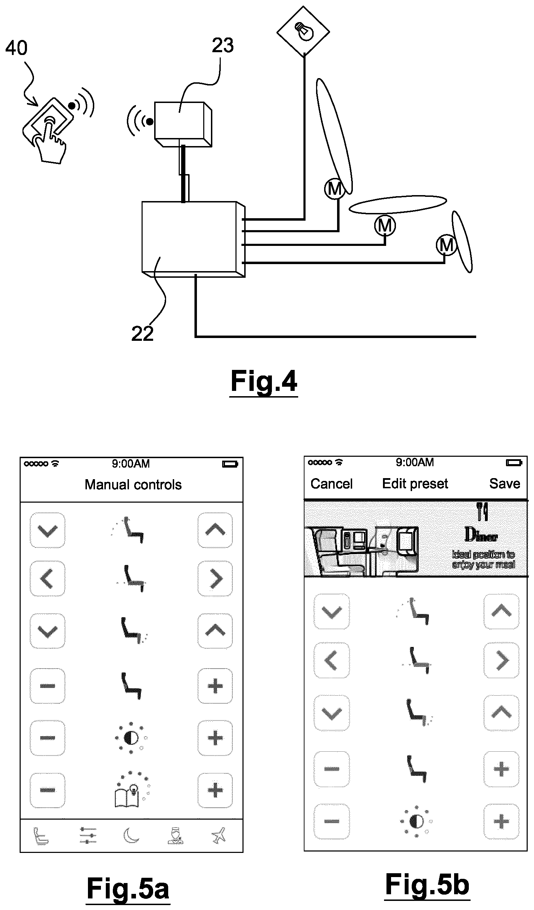

En particulier :
- les capacités de réglage du siège 20 et de ses différents sous ensembles, dont un exemple est schématisé sur la figure 4, sont transmises au terminal passager 40 et des informations mémorisées par le passager sur son terminal passager, antérieurement au cours du vol ou dans un historique de vols précédent, sont transmises à l'unité de gestion 22 du siège.
- des données personnelles du passager, en particulier ses noms et prénoms, sont transmises au calculateur principal 10 de sorte à construire une table des passagers effectivement embarqués. Au cours de cette phase, le calculateur principal 10 vérifie le cas échéant que le passager tente d'appairer son terminal passager avec le siège qui lui a effectivement été attribué lors de son enregistrement, un message pouvant l'avertir en retour en cas d'erreur de placement.
- l'affichage sur un écran de terminal équipage 31, 32 du plan de la cabine avec le nom de chacun des passagers à l'emplacement qu'ils occupent dans la cabine et la possibilité pour un membre de l'équipage de consulter des données personnelles de chacun des passagers. A ce stade de l'appariement, il est également possible de vérifier que le passager est placé conformément au plan de cabine prévu à l'enregistrement, plan de cabine qui est transmis par ailleurs, par exemple via une liaison « gatelink », et le cas échéant d'en acquiescer des modifications.

L'appariement a également pour effet d'ouvrir des capacités de communication entre le terminal passager 40 et les terminaux équipage 31, 32.

Il est ainsi possible, par le truchement de commandes proposées à travers des menus affichés par le programme d'application sur un écran du terminal passager, pour le passager d'émettre des requêtes à l'attention de l'équipage.

Avantageusement, lors de l'appariement, le calculateur principal 10 de la cabine transmet au terminal passager 40 des informations de configuration qui sont utilisées par le programme d'application pour adapter les capacités dudit terminal passager, par exemple en neutralisant l'affichage de fonction qui ne sont pas accessible dans la cabine considérée.

En particulier le menu permet de définir des requêtes variées qui vont bien au-delà de ce que propose le simple bouton d'appel d'un personnel de cabine dans les cabines conventionnelles.

Par exemple il est possible au passager de demander directement une boisson, choisie dans une liste de boissons proposées, de demander un service proposé, de lancer un appel d'urgence.

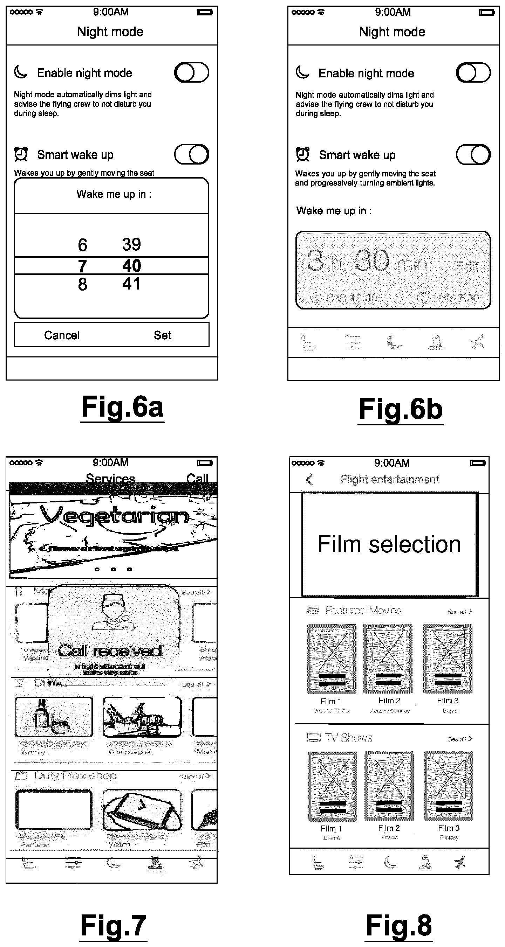

La figure 7 illustre un affichage sur un écran de terminal passager d'un avis d'envoi suite à une action d'appel d'un membre de l'équipage par le passager ce qui permet au passager de savoir que son appel a bien été envoyé.

La figure 8 montre un exemple de choix de films proposé au passager sur son terminal portable, un appui sur la représentation d'un film ou autre choix se traduisant par le déroulement du film sur l'écran vidéo de siège, le cas échéant après un sous menu dans lequel le passager aura précisé des options telles que la langue.

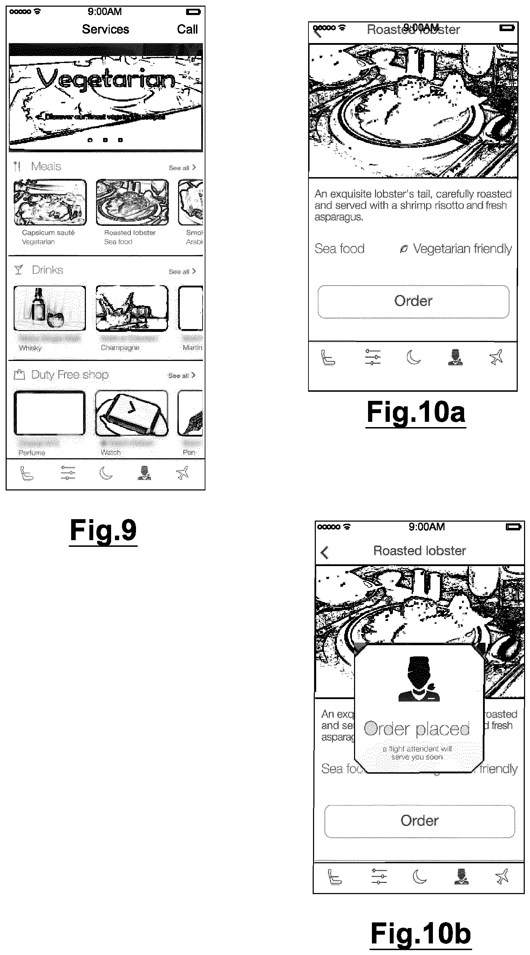

La figure 9 montre un affichage sur l'écran du terminal passager par lequel un passager peut choisir les plats et les boissons d'un repas.

La figure 10a montre la présentation sur l'écran du terminal passager d'un plat sélectionné et le retour sur la commande passé, figure 10b.

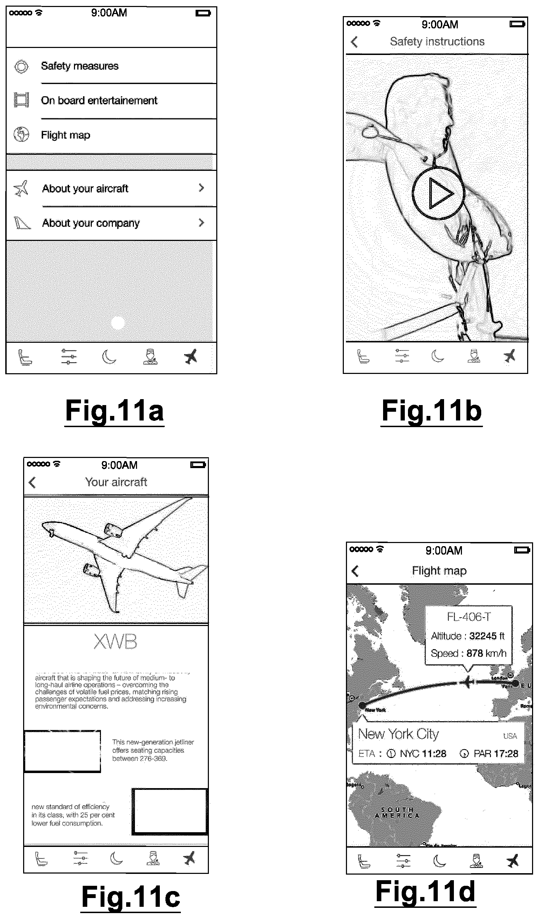

Les figures 11a à 11d illustrent des exemple d'informations pouvant être consultées par le passager sur son terminal portable à travers une page de choix, figure 11a, le passager peut consulter par exemple les consignes de sécurité, figures 11b, des informations sur le type d'aéronef dans lequel il se trouve, figure 11c, ou encore des informations sur le vol et sur son déroulement, figure 11d.

Lorsque le passager émet une requête, celle-ci est formalisée auprès de l'équipage par un affichage sur un écran d'un terminal équipage 31 ou 32.

Des informations transmises par le terminal passager sur lequel a été formulée la requête, le calculateur principal identifie le passager et le siège correspondant, qui sont affichés, avantageusement sous la forme d'une représentation graphique, avec le contenu de la requête sur l'écran d'au moins un terminal équipage.

Il est ainsi possible à l'équipage de satisfaire plus rapidement la requête en évitant des déplacements inutiles dans la cabine.

Dans une forme de mise en œuvre les personnels de l'équipage disposent, chacun de préférence, d'un terminal équipage mobile 32 qui permet à un personnel de recevoir une requête émise depuis un terminal passager, y compris lorsque le personnel de l'équipage concerné est en déplacement dans la cabine.

Dans ce cas, avantageusement, seul le terminal équipage mobile 32, en plus d'un terminal équipage fixe 31, le plus proche du siège correspondant au terminal passager ayant émis la requête affiche la requête. Il sera donné des exemples dans la description d'une architecture de l'invention de méthodes permettant de définir une position en cabine d'un terminal équipage mobile 32.

Il est ainsi possible au steward ou à l'hôtesse le plus proche du passager concerné d'intervenir pour satisfaire à la requête, s'enquérir de détails sur la requête, ou dispenser un message de prise en compte pour faire patienter le passager dans les meilleures conditions.

Dans une forme de réalisation, la requête du passager est maintenue affichée sur le terminal équipage, ou les terminaux équipage, associée à un bouton d'acquittement dont l'appui ne sera réalisé qu'au moment où la demande aura été traitée. Il en résulte, en particulier en cas de requêtes rapprochées ou simultanées émises depuis différents terminaux passager, une gestion des requêtes qui évite que certaines soient oubliées et qui sinon conduirait le passager à la reformuler.

Dans le cas ou plusieurs requêtes sont affichées simultanément sur plusieurs terminaux équipage, fixes ou mobiles, un acquittement relatif à une requête aura pour effet de faire disparaître la requête non seulement sur le terminal équipage sur lequel est réalisé l'acquittement mais également sur tous les terminaux sur lesquels la requête était affichée.

Le terminal passager 40 permet également au passager d'interagir directement avec la cabine, pour la partie qui le concerne, c'est-à-dire principalement le siège qu'il occupe et son environnement immédiat.

Le passager dispose par le biais de son terminal portable 40 de la possibilité de régler son siège.

Pour ce qui concerne les capacités de réglage du siège, il faut comprendre non seulement le mouvement des parties mobiles du siège qui permet au passager de prendre des positions en fonction de ses phases de veilles, et des activités qu'il pratique, et de repos, mais également les fonctions accessoires telles que le réglage de l'intensité lumineuse au niveau du siège, le réglage des bouches d'aération ou encore les commandes liées à l'utilisation des dispositifs d'amusement du passager.

Il convient de noter que suivant le modèle de siège dans la cabine, ou affecté au passager, les possibilités de réglage peuvent être différentes et que dans ce cas des affichages de fonctions de réglage proposées au passager sur son terminal passager 40 sont adaptées, à partir des données transmises au terminal passager lors de l'appariement, pour ne proposer que les fonctions disponibles ou utilisables.

Les figures 5a et 5b illustrent comment le terminal passager 40 est configuré lors de l'appariement de sorte à adapter les fonctions accessibles au passager par des affichages sur l'écran du terminal passager des possibilités de réglage des différentes parties du siège et comment le passager peut mémoriser des réglages préférés ou utiliser des réglages mémorisés antérieurement.

Dans un mode de mise en œuvre particulier, un dispositif d'aide à la maintenance du siège est en mesure de détecter des réglages non utilisables, par exemple en raison d'une panne, limitation qui se trouve avantageusement répercutée sur les possibilités proposées au passager sur son terminal passager.

Avantageusement, le passager dispose sur son terminal passager 40 de commandes de mémorisation de réglages du siège correspondant à des positions privilégiées. En dehors de la position totalement étendue et de la position imposée pour les phases de décollage et d'atterrissage de l'aéronef, des positions personnalisées pour la détente, pour la lecture, pour le réveil... peuvent être mémorisées par le passager sur son terminal passager 40.

Les positions personnelles mémorisées sur le terminal passager au cour d'un vol ou au cours de vols précédents, sous réserve que les positions mémorisées correspondent au modèle de siège attribué dans la cabine 100 sont avantageusement transmises au siège 20 lors de l'appariement du terminal passager avec la cabine, de sorte que ces positions prédéfinies sont également sélectionnables depuis un panneau de commande fixe 25 dédié du siège.

Le passager dispose également de la possibilité de programmer des fonctions particulières du siège en fonction de ses désirs personnels.

Par exemple lorsqu'un fauteuil dispose d'un mode « massage », le terminal passager permet d'activer la fonction « massage » et de fixer une durée du massage pour un arrêt automatique.

Par exemple un terminal passager permet fixer une heure de réveil désirée à laquelle pourront être associées des actions particulières, choisie par le passager, du siège telles que des vibrations de certains éléments mobiles du siège ou des variations lumineuses des éclairages dédiés au siège.

La figure 6a illustre l'affichage sur un écran de terminal passager pendant le choix d'une heure de réveil et la figure 6b montre le même écran lors de l'activation de l'heure sélectionnée.

Le terminal passager permet également à l'équipage de transmettre des informations ou des messages au passager d'un siège.

Certains messages, par exemple « attacher vos ceintures » on vocation à s'adresser à tous les passagers comme en général les messages de sécurité qui seront diffusés sur tous les terminaux passager sans distinction d'emplacement du siège.

Toutefois si les informations sur le passager lors de l'appariement comporte une nationalité du passager, les messages pourront être affiché sur le terminal passager dans la langue correspondante, a priori en plus d'autres langues normalisées.

D'autres messages pourront être personnalisés en fonction du terminal passager.

Par exemple un passager qui aurait oublié de mettre son siège en position décollage/atterrissage lors de l'une de ses phases recevrait un message lui étant spécifiquement destiné lui demandant de bien vouloir ajuster la position de son siège.

Cette demande est possible dans la mesure où le calculateur principal 10 connaît les réglages actuels de chacun des sièges et transmet à l'équipage l'identité du siège qui n'est pas correctement réglé.

Parmi les activités d'un équipage de cabine, les repas servis aux passagers sont la source d'une activité intense dont la gestion, en particulier dans les cabines des classes supérieures où il est d'usage d'offrir des choix aux passagers, est quelquefois délicate lorsqu'il convient de satisfaire autant que possible les souhaits des passagers.

Dans une forme de mise en œuvre, l'équipage soumets à chaque passager par un affichage sur son terminal passager 40 un menu des plats disponibles dans lequel il peut composer un repas dans un premier temps et valider son choix dans un deuxième temps qui est alors transmis au calculateur principal et peut être consulté par les membres de l'équipage au moyen des terminaux équipage à leur disposition.

Il est alors possible à l'équipage d'apporter directement le repas choisi à chacun des passagers, éventuellement dans un créneau horaire défini par chaque passager lors de la composition de son repas.

Dans un mode de mise en œuvre le menu du repas choisi est imprimé de manière personnalisée, par exemple par l'indication du nom et du prénom, par exemple par impression d'un drapeau de la nationalité du passager ou toute autre expression d'une forme de courtoisie.

Dans un mode de mise en œuvre, des informations personnelles concernant les préférences et/ou les contre-indications alimentaires du passager, transférées au calculateur principal 10 lors de l'appariement du terminal passager 40, sont utilisées par le calculateur principal pour détecter d'éventuel anomalies dans le menu sélectionné et signaler ces anomalies à l'équipage en charge de gérer humainement la relation avec le passager.

Dans une forme de mise en œuvre, les souhaits d'un passager régulier de la compagnie exploitant l'aéronef sont mémorisés dans le terminal passager. L'historique mémorisé est transmis, avec l'accord du passager, au calculateur principal 10, le cas échéant à un système de gestion des besoins des clients de la compagnie exploitante, de sorte qu'il est possible dès la réservation d'un passager sur un vol de vérifier si ses services préférés seront disponibles et le cas échéant de prendre des mesures spécifiques lorsqu'elle sont possibles.

Ainsi des préférences aussi diverses que par exemple les vins préférés, les films préférés, disposer d'un second oreiller, peuvent être connues et anticipées lors de la préparation de l'avion ou par l'équipage pendant le vol.

Dans un mode de mise en œuvre, les différentes actions et requêtes d'un passager réalisées au cour d'un vol, sont mémorisées par le terminal passager 40 du passager et, avant la fin du vol, par exemple lors du roulage vers le parking, le calculateur principal par un message adressé audit terminal passager, demande au passager s'il accepte que les données le concernant sur l'usage des services à bord de l'aéronef soient conservées.

Ces données seront avantageusement utilisées pour mieux préparer un vol ultérieur du passager sur la même compagnie, pour anticiper les opérations de maintenances préventives en fonction de l'utilisation réelle des mécanismes des sièges et pour améliorer la conception des équipements futurs par une identification objective en conditions réelles des fonctions les plus appréciées des passagers et les plus utilisées.

Dans une forme de réalisation, des données relatives à des problèmes techniques mis en évidence lors de l'utilisation d'un siège sont mémorisées par l'unité de gestion du siège 22 et ou par le calculateur principal 10 auquel les informations sur le problème technique détecté sont transmises par l'unité de gestion du siège.

Les données sont traitées après le vol, dans le contexte de la maintenance des sièges, par une application dédiée à l'exploitation des dites données.

Dans une forme de réalisation, un opérateur de maintenance dispose d'un terminal mobile qui lui permet, par des liaisons sans fil, de consulter les données de maintenance enregistrées pendant l'utilisation du siège et d'intervenir dans les meilleures conditions en terme de réactivité et de pertinence de son intervention.

Comme expliqué ci-dessus, un terminal passager 40, une fois appairé, est un équipement de la cabine 100 dans laquelle il assure les fonctions dont les principes ont été exposés sur des exemple pratiques.

Dans une cabine 100 d'aéronef, chaque siège est potentiellement occupé par un passager possédant son propre terminal passager 40, c'est-à-dire un téléphone personnel ou une tablette personnelle comportant le logiciel d'application.

Bien que chaque terminal passager soit appairé à un siège affecté au passager détenant ledit terminal passager, la multiplicité des terminaux passager susceptibles d'émettre et de recevoir au même moment dans l'environnement confiné de la cabine nécessite une organisation d'un réseau de communication des données numériques issues des différents émetteurs : les terminaux passager 40, les sièges 20, le calculateur principal 10, les terminaux équipage 31, 32, qui sont également des récepteurs.

Les terminaux mobiles, passager 40 ou équipage 32, sont nécessairement dans le réseau de communication connectés par des liaisons sans fil.

Les équipements fixes tels que les sièges et le ou les terminaux équipage fixes peuvent être connecté au calculateur principal 10 par des liaisons filaires ou par des liaisons sans fil.

Dans tous les cas possible d'organisation du réseau de communication numérique des données, il doit évidemment toujours se trouver un chemin d'accès entre les équipements devant échanger des données.

Cette condition n'est cependant pas nécessairement suffisante du fait que les durées de transmission ne doivent pas introduire de temps de latence entre une commande et l'action qui doit résulter de cette commande.

Par exemple, dans le cas d'une commande de modification d'une position d'un élément du siège, le passager doit ressentir un résultat de son action dans un délai relativement bref, de l'ordre de un dixième de seconde.

Dans le cas d'une demande envoyé à l'équipage, la transmission des données peut sans conséquence pratique dépasser une seconde, avec toutefois sur l'écran du terminal passager un retour visuel suffisamment rapide pour éviter une tendance à doubler une action.

Il résulte de ces contraintes que certaines communications doivent être transmises par des chemins courts pour limiter les temps de latence dans des délais admis.

Dans l'exemple de réalisation, il est mis en œuvre des communications sans fil par des liaisons radio suivant la norme de communication WIFI qui est disponible sur de nombreux appareils pouvant être utilisés comme terminal passager et qui sont aujourd'hui déjà détenus par de nombreuses personnes.

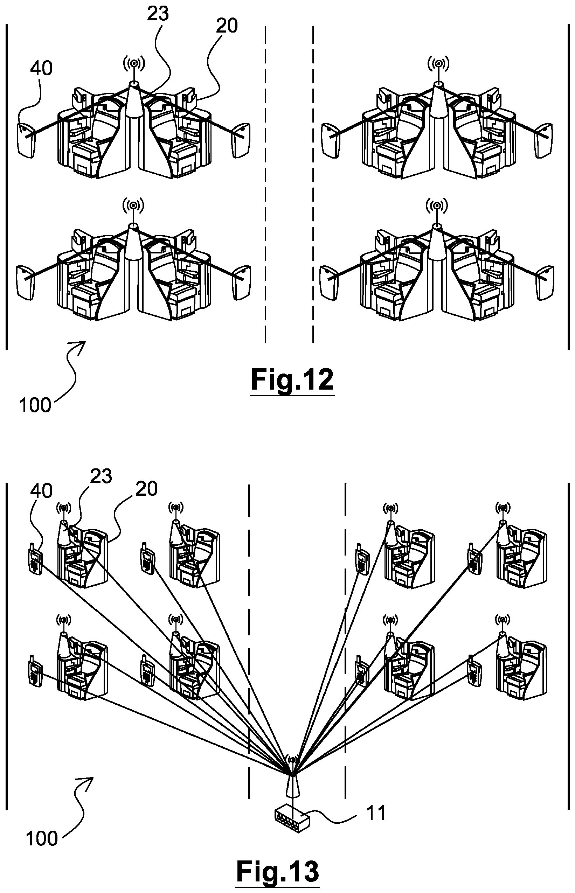

La figure 12 illustre un exemple de réseau dans lequel les terminaux passager 40 communiquent directement avec un module de communication 23 associé au siège auquel le terminal est appairé. Dans une forme de réalisation, comme dans l'exemple illustré, un module est partagée entre deux sièges voisins ce qui permet de limiter le nombre de module de communication et implantées dans la cabine. Cette agencement présente l'avantage d'une communication quasi directe entre le terminal passager et le siège qui a pour effet de limiter les temps de transmission et de limiter la puissance d'émission radioélectrique nécessaire compte tenu de la proximité pendant le vol de l'aéronef du terminal passager et du siège auquel il est appairé.

Dans ce mode de réalisation, les communications entre le siège 20 et le calculateur principal 10 peuvent être réalisée sans fil par le module de communication 23 ou par le moyens de liaisons filaires.

Dans ce mode de réalisation, les communications du terminal passager 40 avec le calculateur principal 10 peuvent être réalisées directement par liaison radio entre ledit terminal passager et ledit calculateur, ou dans une autre forme de réalisation avec le module de communication 23 du siège utilisée comme relais ayant dans ce cas un rôle de routeur.

La figure 13 illustre un autre exemple de réseau dans lequel toutes les communications des équipements de la cabine, en particulier les terminaux passager 40, les terminaux équipage mobile et les sièges sont réalisées entre l'équipement concerné, considérés comme clients, et le boîtier cabine de communication sans fil 11, ou un nombre réduit de boîtiers de communication sans fil, ledit boîtier de communication réalisant avantageusement une fonction de routeur de données, par lequel transitent toutes les communications.

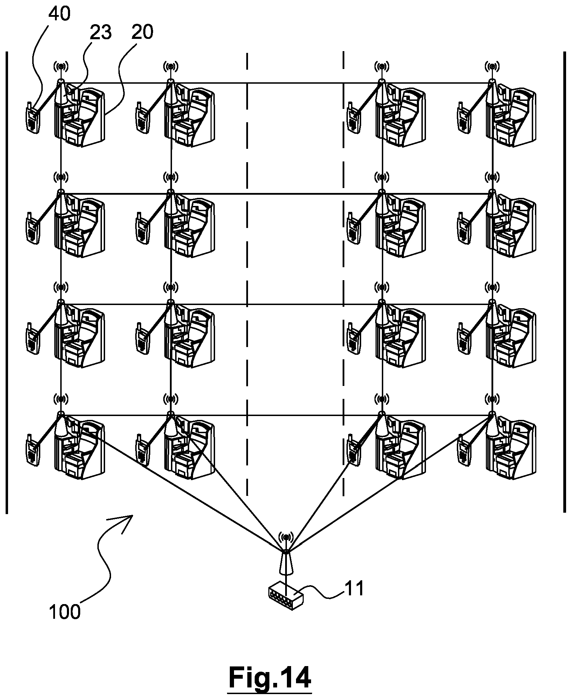

La figure 14 illustre un autre exemple de réseau constituant un maillage dans lequel chaque terminal passager 40 est en communication avec le siège 20 auquel il est appairé par un module de communication 23 du siège, ou d'un groupe de siège, reprenant en cela l'agencement du mode de réalisation de la figure 12, mais dans lequel les communications avec le calculateur principal 10 transitent par les modules de communications de différents sièges utilisées dans ce cas comme répéteur pour transmettre les données à un boîtier cabine de communication sans fil 11.

Il est dans ce cas limité la puissance nécessaire pour la transmission des données et assuré une redondance des chemins par lesquels peuvent être transmis les données pour palier à de potentielles pannes de certains équipements mis en œuvre pour la transmission des données.

## Revendications

1. Cabine (100) d'aéronef comportant une pluralité de sièges (20) et au moins un calculateur principal (10), dans laquelle au moins un siège de ladite pluralité de sièges est appairé avec un terminal passager (40), ledit siège et ledit terminal passager appairé communiquant entre eux sans fil pour transmettre des données numériques relatives à des capacités de réglage dudit siège depuis une unité de gestion (22) dudit siège vers le terminal passager (40) et pour transmettre des données numériques relatives à des instructions de réglages dudit siège depuis le terminal passager (40) vers l'unité de gestion (22) du siège, le terminal passager (40) comportant un écran (41) et un logiciel d'application interprétant les données reçues de l'unité de gestion du siège pour afficher sur un écran (41) du terminal passager une représentation des réglages possibles pour ledit siège et interprétant des actions d'un opérateur sur des touches du terminal passager comme des instructions de réglage du siège, et **caractérisée en ce qu'au** moins un siège (20) de la pluralité de sièges est identifié dans la cabine (100) par un identifiant unique comprenant un code graphique apposé sur le siège et décodé par le terminal passager (40), et **en ce que** le calculateur principal (10) est configuré pour construire une table de passagers effectivement embarqués à partir des données personnelles d'un passager, identifié comme possesseur d'un terminal passager (40), lesdites données personnelles étant transmises au calculateur principal (10) par chaque terminal passager (40) appairé à un siège dans la cabine.

2. Cabine d'aéronef suivant la revendication 1, dans laquelle le calculateur principal (10) échange des données numériques avec au moins un terminal passager (40) appairé à un siège et avec au moins un terminal équipage fixe (31) et ou un terminal équipage mobile (32) pour transmettre audit terminal passager des requêtes que ledit terminal passager est autorisé à émettre et pour transmettre des requêtes, choisies par un opérateur, audit terminal passager, depuis ledit terminal passager audit terminal équipage, et pour transférer des requêtes, choisies par un opérateur audit terminal équipage, depuis ledit terminal équipage audit terminal passager, des logiciels d'applications exécutés par les dits terminaux passager et équipage affichant les requêtes reçues et affichant chacun des interfaces pour permettre à des opérateurs de formuler des requêtes.

3. Cabine d'aéronef suivant la revendication 1 ou la revendication 2 dans lequel l'unité de gestion (22) d'au moins un siège (20) de la pluralité de sièges est connecté par une liaison numérique filaire à un module de communication (23) pour transmettre directement les données numériques relatives à des instructions de réglages dudit siège, reçues du terminal passager (40) par liaison sans fil, à l'unité de gestion (22) du siège considéré.

4. Cabine d'aéronef suivant l'une des revendications 1 à 3 dans lequel l'unité de gestion (22) de chaque siège (20) de la pluralité de sièges est connecté par une liaison numérique filaire à un module de communication (23) pour transmettre à l'unité de gestion (22) du siège considéré les données numériques relatives à des instructions de réglages dudit siège, reçues par liaison sans fil d'un boîtier de communication cabine (11), ledit boîtier de communication cabine relayant les instructions de réglage dudit siège émises par le terminal passager (40) par liaison sans fil et reçues par ledit boîtier de communication cabine.

5. Cabine d'aéronef suivant la revendication 3 ou la revendication 4 dans lequel au moins un siège (20) comporte un module de communication (23) connecté à la seule unité de gestion (22) du siège considéré.

6. Cabine d'aéronef suivant l'une des revendications 3 à 5 dans lequel au moins un module de communication (23) est connecté à plusieurs unités de gestion (22) appartenant chacune à un des sièges d'un groupe de sièges immédiatement voisins dans ladite cabine.

7. Cabine d'aéronef suivant l'une des revendications 3 à 6 dans lequel au moins un module de communication (23) est mis en œuvre comme relais de transmission des données entre un boîtier de communication cabine (11) et au moins un autre module de communication (23).

8. Cabine d'aéronef suivant l'une des revendications précédentes prise en combinaison avec la revendication 2 dans laquelle les données échangées entre un terminal passager (40) et le calculateur principal (10) sont reçues et émises par le un boîtier de communication cabine (11) directement ou via un module de communication (23) d'un siège ou d'un groupe de sièges.

9. Cabine d'aéronef suivant la revendication 8 dans lequel au moins un terminal passager (40) comporte une caméra de lecture optique et dans laquelle le logiciel d'application dudit terminal passager est configuré pour décoder le code graphique apposé sur le siège et caractéristique de l'identifiant unique lors de l'appairage dudit siège et dudit terminal passager.

10. Procédé de gestion d'interactions entre au moins un terminal passager (40), communiquant des données numériques par une liaison sans fil, et au moins un siège (20) d'une pluralité de sièges d'une cabine d'avion (100) dans lequel procédé un logiciel d'application de gestion d'interactions est préalablement installé sur ledit au moins un terminal passager, **caractérisé en ce qu'**il comporte une première étape d'appariement dudit au moins un terminal passager avec l'au moins un siège par une identification par le terminal passager (40) d'un identifiant unique comprenant un code graphique apposé sur le siège (20) et une deuxième étape d'initialisation dans laquelle :
- des capacités de réglage du siège (20) sont transmises au terminal passager (40) et des informations, mémorisées antérieurement sur ledit terminal passager, sont transmises à l'unité de gestion (22) du siège ;
- le logiciel d'application présente sur un écran (41) du terminal passager (40) au travers de représentations graphiques et ou textuelles les fonctions accessibles à un opérateur utilisant ledit terminal passager pour modifier les réglages du siège (20) ;
et **en ce que** lors de l'étape d'appariement, des données personnelles d'un passager, identifié comme possesseur du terminal passager (40) dans ledit terminal passager, mémorisées dans une mémoire dudit terminal passager, sont transmises à un calculateur principal (10) de la cabine, ledit calculateur principal :
- vérifiant qu'une identité dudit passager correspond à un passager effectivement enregistré sur le vol en cours de chargement et le cas échéant vérifiant, par comparaison à une liste d'embarquement transmise par un poste d'enregistrement des passagers, que le passager tente d'appairer son terminal passager avec le siège qui lui a effectivement été attribué lors de son enregistrement ;
- enregistrant les dites données personnelles de sorte à construire une table des passagers effectivement embarqués et au besoin affichant sur un écran d'un terminal équipage (31, 32) un plan de cabine avec les noms de chacun des passagers.

11. Procédé de gestion d'interactions suivant la revendication 10 dans lequel un terminal passager (20) reçoit du calculateur principal (10) des données caractéristiques de requêtes pouvant être formulées par un passager auprès de l'équipage, les dites données reçues par le terminal passager (40) déterminant des possibilités d'affichage sur l'écran (42) dudit terminal passager, par lequel terminal passager le passager effectue des requêtes.

12. Procédé de gestion d'interactions suivant la revendication 10 ou la revendication 11 dans lequel un terminal passager (20) reçoit du calculateur principal (10) des informations et ou des requêtes et ou des instructions élaborées par au moins un terminal équipage fixe (31) et ou par un terminal équipage mobile (32).

13. Procédé de gestion d'interactions suivant l'une des revendications 10 à 12 dans lequel des données personnelles d'un passager, enregistrées dans le calculateur principal (10) lors de l'appariement du terminal passager avec le siège, sont affichées, sur au moins un terminal équipage fixe (31) et ou un terminal équipage mobile (32), par une interaction d'un opérateur avec un écran dudit au moins un terminal équipage fixe ou terminal équipage mobile, et ou lors de la réception d'une requête émise par le terminal passager (40) et reçue par le calculateur principal (10).

14. Procédé suivant l'une des revendications 10 à 13 dans lequel un terminal passager (40) appairé avec un siège (20), sur action d'un opérateur dudit terminal passager :
- émet des instructions pour modifier les réglages autorisés du siège, par mouvement d'éléments mobiles du siège, par modification d'intensité lumineuse d'un éclairage individuel du siège, par modification d'un débit et ou d'une température de ventilation individuelle du siège ;
- émet des requêtes pour le choix d'une heure de réveil par activation de mouvements d'éléments mobiles du siège et ou par modification d'intensité lumineuse d'un éclairage individuel ;
- émet des requêtes à l'attention de l'équipage pour demander une assistance, pour réserver un plat pour un repas, pour demander une boisson, pour demander une revue, pour commander un article dans la boutique détaxée du bord, lesdites requêtes étant formulées au travers d'une interface graphique et ou textuelle affichée sur l'écran (41) du terminal passager (40), ladite interface n'affichant que les requêtes possibles au moment de leurs formulations.

15. Procédé suivant la revendication 14 dans lequel une requête émise à l'attention de l'équipage, lorsqu'elle est reçue par le calculateur principal (10), est transmise à au moins un terminal équipage mobile (32) identifié par le calculateur principal (10) comme étant le terminal équipage le plus proche du siège appairé au terminal passager (40) à l'origine de la requête, ledit terminal équipage mobile étant par exemple localisé dans la cabine par la force d'un signal reçu.

16. Procédé suivant l'une des revendications 10 à 15 dans lequel les actions réalisées par un opérateur sur un terminal passager (40) appairé avec un siège (20) sont mémorisées dans une mémoire d'une unité de gestion (22) du siège, et ou dans une mémoire du calculateur principal (10) et ou dans une mémoire du terminal passager (40) en vue de leurs transmissions ultérieures vers un centre de traitement statistique sur l'utilisation des interactions dans la cabine.

17. Procédé suivant l'une des revendications 10 à 16 dans lequel les interactions réalisées sur le siège et ou les défauts de fonctionnement détectés par des systèmes de surveillance sont mémorisés dans une mémoire du siège (20) et ou une mémoire du calculateur central (10) sous la forme d'un historique pour être analysé par un outil de maintenance des sièges.

## Patentansprüche

1. Luftfahrzeugkabine (100), die eine Vielzahl von Sitzen (20) und mindestens einen Hauptrechner (10) umfasst, wobei mindestens ein Sitz der Vielzahl von Sitzen einem Passagierendgerät (40) zugeordnet ist, wobei der Sitz und das zugeordnete Passagierendgerät miteinander drahtlos kommunizieren, um digitale Daten in Zusammenhang mit Einstellfähigkeiten des Sitzes von einer Verwaltungseinheit (22) des Sitzes zu dem Passagierendgerät (40) zu kommunizieren, und um die digitalen Daten in Zusammenhang mit Einstellanweisungen des Sitzes von dem Passagierendgerät (40) zu der Verwaltungseinheit (22) des Sitzes zu übertragen, wobei das Passagierendgerät (40) einen Bildschirm (41) und eine Anwendungssoftware umfasst, die Daten auslegt, die von der Verwaltungseinheit des Sitzes empfangen wurden, um auf einem Bildschirm (41) des Passagierendgeräts eine Darstellung der möglichen Einstellungen des Sitzes anzuzeigen, und Aktionen eines Bedieners auf den Tasten des Passagierendgeräts als Einstellanweisungen des Sitzes auslegt, und **dadurch gekennzeichnet, dass** mindestens ein Sitz (20) der Vielzahl von Sitzen in der Kabine (100) durch einen eindeutigen Identifikator identifiziert ist, der einen grafischen Code umfasst, der auf dem Sitz angebracht ist und von dem Passagierendgerät (40) decodiert wird, und dadurch, dass der Hauptrechner (10) konfiguriert ist, um eine Tabelle von Passagieren, die effektiv an Bord gekommen sind, ausgehend von den persönlichen Daten eines Passagiers, der als Inhaber eines Passagierendgeräts (40) identifiziert ist, aufzubauen, wobei die persönlichen Daten an den Hauptrechner (10) von jedem Passagierendgerät (40), das einem Sitz in der Kabine zugeordnet ist, übertragen werden.

2. Luftfahrzeugkabine nach Anspruch 1, wobei der Hauptrechner (10) digitale Daten mit mindestens einem Passagierendgerät (40), das einem Sitz zugeordnet ist, und mit mindestens einem stationären Besatzungsendgerät (31) und/oder einem mobilen Besatzungsendgerät (32) austauscht, um an das Besatzungsendgerät Anfragen des Passagierendgeräts zu übertragen, deren Senden dem Passagierendgerät gestattet ist, und um Anfragen, die von einem Bediener an dem Passagierendgerät ausgewählt werden, ausgehend von dem Passagierendgerät an das Besatzungsendgerät zu übertragen, und um Anfragen, die von einem Bediener auf dem Besatzungsendgerät ausgewählt werden, von dem Besatzungsendgerät an das Passagierendgerät zu transferieren, wobei Softwareanwendungen, die von den Passagierendgeräten und Besatzungsendgerät ausgeführt werden, die empfangenen Anfragen anzeigen und jeweils Schnittflächen anzeigen, um es Bedienern zu erlauben, Anfragen zu formulieren.

3. Luftfahrzeugkabine nach Anspruch 1 oder Anspruch 2, wobei die Verwaltungseinheit (22) mindestens eines Sitzes (20) der Vielzahl von Sitzen durch eine digitale Drahtverbindung an ein Kommunikationsmodul (23) angeschlossen ist, um direkt die digitalen Daten in Zusammenhang mit Einstellanweisungen des Sitzes, die von dem Passagierendgerät (40) durch drahtlose Verbindung empfangen werden, an die Verwaltungseinheit (22) des betreffenden Sitzes zu übertragen.

4. Luftfahrzeugkabine nach einem der Ansprüche 1 bis 3, wobei die Verwaltungseinheit (22) jedes Sitzes (20) der Vielzahl von Sitzen mit einer digitalen Drahtverbindung mit einem Kommunikationsmodul (23) verbunden ist, um an die Verwaltungseinheit (22) des betreffenden Sitzes die digitalen Daten in Zusammenhang mit Einstellanweisungen des Sitzes, die durch drahtlose Verbindung von einem Kabinenkommunikationsgehäuse (11) empfangen werden, zu übertragen, wobei das Kabinenkommunikationsgehäuse die Einstellanweisungen des Sitzes, die von dem Passagierendgerät (40) durch drahtlose Verbindung ausgegeben werden und von dem Kabinenkommunikationsgehäuse empfangen werden, weiterzuleiten.

5. Luftfahrzeugkabine nach Anspruch 3 oder nach Anspruch 4, wobei mindestens ein Sitz (20) ein Kommunikationsmodul (23) umfasst, das mit der einzigen Verwaltungseinheit (22) des betreffenden Sitzes verbunden ist.

6. Luftfahrzeugkabine nach einem der Ansprüche 3 bis 5, wobei mindestens ein Kommunikationsmodul (23) mit mehreren Verwaltungseinheiten (22) verbunden ist, die jeweils zu einem der Sitze einer Gruppe von Sitzen, die unmittelbar benachbart sind, in der Kabine gehören.

7. Luftfahrzeugkabine nach einem der Ansprüche 3 bis 6, wobei mindestens ein Kommunikationsmodul (23) als Übertragungsrelais der Daten zwischen einem Kabinenkommunikationsgehäuse (11) und mindestens einem anderen Kommunikationsmodul (23) umgesetzt ist.

8. Luftfahrzeugkabine nach einem der vorstehenden Ansprüche, in Kombination mit Anspruch 2 genommen, wobei die Daten, die zwischen einem Passagierendgerät (40) und dem Hauptrechner (10) empfangen werden und von dem einen Kabinenkommunikationsgehäuse (11) direkt oder über ein Kommunikationsmodul (23) eines Sitzes oder einer Sitzgruppe ausgegeben werden.

9. Luftfahrzeugkabine nach Anspruch 8, wobei mindestens ein Passagierendgerät (40) eine optische Lesekamera umfasst, und wobei die Anwendungssoftware des Passagierendgeräts konfiguriert ist, um den grafischen Code, der auf dem Sitz angebracht ist und der für den eindeutigen Identifikator bei dem Zuordnen des Sitzes und des Passagierendgeräts charakteristisch ist, zu dekodieren.

10. Verfahren zur Verwaltung von Wechselwirkungen zwischen mindestens einem Passagierendgerät (40), das digitale Daten über eine drahtlose Verbindung kommuniziert, und mindestens einem Sitz (20) einer Vielzahl von Sitzen einer Luftfahrzeugkabine (100), wobei bei dem Verfahren eine Verwaltungssoftwareanwendung von Wechselwirkungen vorab auf dem mindestens einen Passagierendgerät installiert wird, **dadurch gekennzeichnet, dass** es einen ersten Zuordnungsschritt des mindestens einen Passagierendgeräts zu mindestens einem Sitz durch eine Identifikation durch das Passagierendgerät (40) eines eindeutigen Identifikators, der einen grafischen Code umfasst, der auf dem Sitz (20) angebracht ist, installiert wird, und einen zweiten Initialisierungsschritt, bei dem:
- Einstellfähigkeiten des Sitzes (20) an das Passagierendgerät (40) übertragen werden, und Informationen, die vorab auf dem Passagierendgerät gespeichert werden, an die Verwaltungseinheit (22) des Sitzes übertragen werden;
- die Softwareanwendung auf einem Bildschirm (41) des Passagierendgeräts (40) anhand grafischer oder Textdarstellungen die Funktionen, die für einen Bediener, der das Passagierendgerät verwendet, zugänglich sind, um die Einstellungen des Sitzes (20) zu ändern, präsentiert; und dadurch, dass bei dem Zuordnungsschritt persönliche Daten eines Passagiers, der als Inhaber des Passagierendgeräts (40) in dem Passagierendgerät identifiziert ist, die in einem Speicher des Passagierendgeräts gespeichert sind, an einen Hauptrechner (10) der Kabine übertragen werden, wobei der Hauptrechner:
- prüft, ob eine Identität des Passagiers einem Passagier entspricht, der tatsächlich auf dem Flug, der sich im Einsteigen befindet, registriert ist, und gegebenenfalls durch Vergleich mit einer Passagierliste, die von einem Registrierungsposten der Passagiere übertragen wird, prüft, ob der Passagier versucht, sein Passagierendgerät dem Sitz, der ihm effektiv bei seiner Registrierung zugewiesen wurde, zuzuordnen;
- die persönlichen Daten derart registriert, dass eine Tabelle der Passagiere, die effektiv an Bord gegangen sind, aufgebaut wird und bei Bedarf auf einem Bildschirm eines Besatzungsendgeräts (31, 32) einen Plan der Kabine mit den Namen jedes Passagiers anzeigt.

11. Verfahren zur Verwaltung von Wechselwirkungen nach Anspruch 10, wobei ein Passagierendgerät (20) von dem Hauptrechner (10) charakteristische Daten von Anfragen empfängt, die von einem Passagier bei der Besatzung formuliert werden können, wobei die Daten, die durch das Passagierendgerät (40) empfangen werden, Anzeigemöglichkeiten auf dem Bildschirm (42) des Passagierendgeräts, durch das der Passagier Anfragen ausführt, bestimmt.

12. Verfahren zur Verwaltung von Wechselwirkungen nach Anspruch 10 oder Anspruch 11, wobei ein Passagierendgerät (20) von dem Hauptrechner (10) Informationen und/oder Anfragen und/oder Anweisungen, die von mindestens einem stationären Besatzungsendgerät (31) und/oder von einem mobilen Besatzungsendgerät (32) erstellt werden, empfängt.

13. Verfahren zur Verwaltung von Wechselwirkungen nach einem der Ansprüche 10 bis 12, wobei persönliche Daten eines Passagiers, die in dem Hauptrechner (10) bei dem Zuordnen des Passagierendgeräts zu dem Sitz aufgezeichnet werden, auf mindestens einem stationären Besatzungsendgerät (31) und/oder einem mobilen Besatzungsendgerät (32) durch eine Wechselwirkung eines Bedieners mit einem Bildschirm des mindestens einen stationären Besatzungsendgeräts oder mobilen Besatzungsendgeräts und/oder bei dem Empfang einer Anfrage, die von dem Passagierendgerät (40) gesendet und von dem Hauptrechner (10) empfangen wird, angezeigt werden.

14. Verfahren nach einem der Ansprüche 10 bis 13, wobei ein Passagierendgerät (40), das einem Sitz (20) zugeordnet ist, bei Betätigen eines Bedieners des Passagierendgeräts:
- Anweisungen ausgibt, um die zugelassenen Einstellungen des Sitzes durch Bewegung beweglicher Elemente des Sitzes, durch Änderung von Leuchtstärke einer individuellen Beleuchtung des Sitzes, durch Änderung eines Belüftungsdurchsatzes und/oder einer individuellen Belüftungstemperatur zu ändern;
- Anfragen für die Auswahl einer Weckuhrzeit durch Aktivieren von Bewegungen beweglicher Elemente des Sitzes und/oder durch Änderung der Beleuchtungsstärke einer individuellen Beleuchtung ausgibt;
- Anfragen zu der Besatzung ausgibt, um eine Hilfe anzufordern, um ein Gericht für eine Mahlzeit zu reservieren, um ein Getränk anzufordern, um eine Zeitschrift anzufordern, um einen Artikel in der Bord-Duty-Free-Boutique zu bestellen, wobei die Anfragen durch eine grafische oder Textbenutzeroberfläche, die auf dem Bildschirm (41) des Passagierendgeräts (40) angezeigt wird, formuliert werden, wobei die Benutzeroberfläche nur Anfragen anzeigt, die im Augenblick ihrer Formulierungen möglich sind.

15. Verfahren nach Anspruch 14, wobei eine Anfrage, die zu der Besatzung ausgegeben wird, wenn sie von dem Hauptrechner (10) empfangen wird, an mindestens ein mobiles Besatzungsendgerät (32) übertragen wird, das von dem Hauptrechner (10) als das Besatzungsendgerät, das dem Sitz, der dem Passagierendgerät (40), das der Ursprung der Anfrage ist, zugeordnet ist, am nächsten ist, wobei das mobile Besatzungsendgerät zum Beispiel in der Kabine anhand der Kraft eines empfangenen Signals lokalisiert wird.

16. Verfahren nach einem der Ansprüche 10 bis 15, wobei die Aktionen, die von einem Bediener auf einem Passagierendgerät (40), das einem Sitz (20) zugeordnet ist, in einem Speicher einer Verwaltungseinheit (22) des Sitzes und/oder in einem Speicher des Hauptrechners (10) und/oder in einem Speicher des Passagierendgeräts (40) zu ihrer späteren Übertragung zu einem Statistikverarbeitungszentrum über die Verwendung der Wechselwirkungen in der Kabine gespeichert werden.

17. Verfahren nach einem der Ansprüche 10 bis 16, wobei die Wechselwirkungen, die auf dem Sitz ausgeführt werden, und/oder die Betriebsfehler, die durch Überwachungssysteme erfasst werden, in einem Speicher des Sitzes (20) und/oder einem Speicher des Zentralrechners (10) in der Form einer Historie gespeichert werden, um von einem Wartungstool der Sitze analysiert zu werden.

## Claims

1. Cabin (100) of an aircraft comprising a plurality of seats (20) and at least one main calculator (10), wherein at least one seat of said plurality of seats is paired with a passenger terminal (40), said seat and said paired passenger terminal communicating with each other wirelessly in order to transmit digital data concerning the capacities for adjusting said seat from a management unit (22) from said seat to the passenger terminal (40) and in order to transmit digital data concerning instructions for adjusting said seat from the passenger terminal (40) to the management unit (22) of the seat, with the passenger terminal (40) comprising a screen (41) and an application software that interprets the data received from the management unit of the seat in order to display on a screen (41) of the passenger terminal a representation of the possible adjustments for said seat and interpreting actions of an operator on buttons of the passenger terminal as instructions for adjusting the seat, and **characterised in that** at least one seat (20) of the plurality of seats is identified in the cabin (100) by a unique identifier comprising a graphic code affixed on the seat and decoded by the passenger terminal (40), and **in that** the main calculator (10) is configured to build a table of passengers who are effectively on board from the personal data of a passenger, identified as a holder of a passenger terminal (40), said personal data being transmitted to the main calculator (10) by each passenger terminal (40) paired to a seat in the cabin.

2. Cabin of an aircraft according to claim 1, wherein the main calculator (10) exchanges digital data with at least one passenger terminal (40) paired to a seat and with at least one fixed crew terminal (31) and or one mobile crew terminal (32) in order to transmit to said passenger terminal requests that said passenger terminal is authorised to issue and for transmitting requests, chosen by an operator, to said passenger terminal, from said passenger terminal to said crew terminal, and for transferring requests, chosen by an operator to said crew terminal, from said crew terminal to said passenger terminal, with application software executed by said passenger and crew terminals displaying the requests received and displaying each one of the interfaces in order to allow operators to formulate requests.

3. Cabin of an aircraft according to claim 1 or claim 2 wherein the management unit (22) of at least one seat (20) of the plurality of seats is connected by a wired digital link to a communication module (23) for directly transmitting the digital data relative to instructions for adjusting said seat, received by the passenger terminal (40) by wireless connection, to the management unit (22) of the seat considered.

4. Cabin of an aircraft according to one of claims 1 to 3 wherein the management unit (22) of each seat (20) of the plurality of seats is connected by a wired digital link to a communication module (23) in order to transmit to the management unit (22) of the seat considered the digital data concerning instructions for adjusting said seat, received by wireless connection from a cabin communication box (11), said cabin communication box relaying the instructions for adjusting said seat issued by the passenger terminal (40) by wireless connection and received by said cabin communication box.

5. Cabin of an aircraft according to claim 3 or claim 4 wherein at least one seat (20) comprises a communication module (23) connected to the only management unit (22) of the seat considered.

6. Cabin of an aircraft according to one of claims 3 to 5 wherein at least one communication module (23) is connected to several management units (22) with each one belonging to one of the seats of a group of immediately adjacent seats in said cabin.

7. Cabin of an aircraft according to one of claims 3 to 6 wherein at least one communication module (23) is implemented as a transmission relay of the data between a cabin communication box (11) and at least one other communication module (23).

8. Cabin of an aircraft according to one of the preceding claims taken in combination with claim 2 wherein the data exchanged between a passenger terminal (40) and the main calculator (10) is received and issued by the cabin communication box (11) directly or via a communication module (23) of a seat or of a group of seats.

9. Cabin of an aircraft according to claim 8 wherein at least one passenger terminal (40) comprises an optical reading camera and wherein the application software of said passenger terminal is configured to decode the graphic code affixed onto the seat and characteristic of the unique identifier during the pairing of said seat and of said passenger terminal.

10. Method for managing interactions between at least one passenger terminal (40), communicating digital data via a wireless connection, and at least one seat (20) of a plurality of seats of an aircraft cabin (100) wherein method an interface management application software is installed beforehand on said at least one passenger terminal, **characterised in that** it comprises a first step of pairing said at least one passenger terminal with the at least one seat via an identification by the passenger terminal (40) of a unique identifier comprising a graphic code affixed on the seat (20) and a second step of initialisation wherein:
- capacities for adjusting the seat (20) are transmitted to the passenger terminal (40) and information, memorised beforehand on said passenger terminal, is transmitted to the management unit (22) of the seat;
- the application software presents on a screen (41) of the passenger terminal (40) through graphical or textual representations the functions that can be accessed by an operator who is using said passenger terminal in order to modify the settings of the seat (20);
and **in that** during the step of pairing, personal data of a passenger, identified as a holder of the passenger terminal (40) in said passenger terminal, memorised in a memory of said passenger terminal, is transmitted to a main calculator (10) of the cabin, said main calculator:
- checking that an identity of said passenger corresponds to a passenger who is effectively booked on the flight in the process of loading and where applicable checking, by comparing with a boarding list transmitted by a passenger boarding station, that the passenger is trying to pair his passenger terminal with the seat that was effectively assigned to him during the booking thereof;
- recording said personal data in such a way as to build a table of the passengers who have effectively boarded and as needed displaying on a screen of a crew terminal (31, 32) a map of the cabin with the names of each one of the passengers.

11. Method for the management of interactions according to claim 10 wherein a passenger terminal (20) receives from the main calculator (10) data characteristic of requests that can be formulated by a passenger with the crew, with said data received by the passenger terminal (40) determining display possibilities on the screen (42) of said passenger terminal, with which said passenger terminal the passenger makes requests.

12. Method for the management of interactions according to claim 10 or claim 11 wherein a passenger terminal (20) receives from the main calculator (10) information and/or requests and/or instructions elaborated by at least one fixed crew terminal (31) and/or by a mobile crew terminal (32) .

13. Method for the management of interactions according to one of claims 10 to 12 wherein the personal data of a passenger, recorded in the main calculator (10) during the pairing of the passenger terminal with the seat, is displayed, on at least one fixed crew terminal (31) and/or a mobile crew terminal (32), via an interaction of an operator with a screen of said at least one fixed crew terminal or mobile crew terminal, and/or during the reception of a request issued by the passenger terminal (40) and received by the main calculator (10).

14. Method according to one of claims 10 to 13 wherein a passenger terminal (40) paired with a seat (20), upon action from an operator of said passenger terminal:
- issues instructions for modifying the authorised settings of the seat, by movement of mobile elements of the seat, by modification of the light intensity of an individual lighting of the seat, by modification of a flow rate and/or of an individual ventilation temperature of the seat;
- issues requests for the choice of a wakeup time by activation of movements of mobile elements of the seat and/or by modification of the light intensity of an individual lighting;
- issues requested to the attention of the crew in order to request assistance, to reserve a disk for a meal, to request a drink, to request a magazine, to order an item from the onboard duty free boutique, said requests being formulated through a graphic or textual interface displayed on the screen (41) of the passenger terminal (40), said interface displaying only the requests that are possible at the time of the formulation thereof.

15. Method according to claim 14 wherein a request issued for the attention of the crew, when it is received by the main calculator (10), is transmitted to at least one mobile crew terminal (32) identified by the main calculator (10) as being the crew terminal that is closest to the seat paired with the passenger terminal (40) at the origin of the request, said mobile crew terminal being for example located in the cabin by the force of a received signal.

16. Method according to one of claims 10 to 15 wherein the actions carried out by an operator on a passenger terminal (40) paired with a seat (20) are memorised in a memory of a management unit (22) of the seat, and/or in a memory of the main calculator (10) and/or in a memory of the passenger terminal (40) for the purpose of transmitting them later to a centre for processing statistics on the use of the interactions in the cabin.

17. Method according to one of claims 10 to 16 wherein the interactions carried out on the seat and/or the operating defects detected by monitoring systems are memorise din a memory of the seat (20) and/or a memory of the central calculator (10) in the form of a history can be analysed by a seat maintenance tool.
